# EUROPEAN PATENT APPLICATION

(11) **EP 2 503 747 A1**
(43) Date of publication of application: **26.09.2012**
(21) Application number: 12152615.6
(22) Date of filing: 26.01.2012
(51) Int. Cl.: H04L 12/56

(54) **Data transmitting device, parallel computer system, and controlling method**

(30) Priority: 22.03.2011 JP 2011063400
(71) Applicant: Fujitsu Limited, Kawasaki-shi, Kanagawa 211-8588 (JP)
(72) Inventor: Ikeda, Yoshiro, Kanagawa, 211-8588 (JP)
(74) Representative: HOFFMANN EITLE

(57) **Abstract**

The data transmitting device (10 to 10e) receives packets from a plurality of computation nodes (2 to 2e) transmitting packets to each other. The data transmitting device (10 to 10e) arbitrates transmission of the received packets based on information in the header of the packets. The information indicates how much delay the packet has experienced until now.

## Description

### FIELD

The embodiments discussed herein are directed to a data transmitting device, a parallel computer system, and a controlling method of the data transmitting device.

### BACKGROUND

In the related art, a parallel computer system that includes plural computation nodes is known. As an example of the parallel computer system, there is a known parallel computer system where each computation node is provided with a router to relay communication between plural computation nodes.

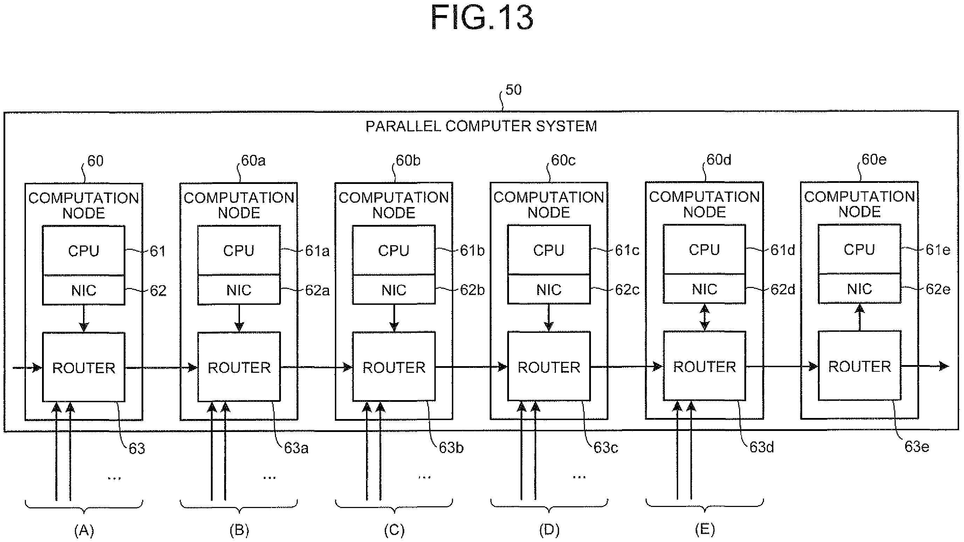

FIG. 13 is a diagram illustrating an example of plural computation nodes that are included in a parallel computer system. In the example illustrated in FIG. 13, a parallel computer system 50 includes plural computation nodes 60 to 60e. The computation nodes 60 to 60e have central processing units (CPUs) 61 to 61e, network interface controllers (NICs) 62 to 62e, and routers 63 to 63e, respectively. Each of the computation nodes 60a to 60e executes the same process as that of the computation node 60 and the description will not be repeated.

The CPU 61 executes a program that is allocated to the CPU itself and transmits information to be transmitted to the other CPUs 61a to 61e to the NIC 62. The NIC 62 packets the information to be transmitted from the CPU 61 to the other CPUs 61a to 61e and transmits the information to the router 63. The router 63 has an input port that receives packets from the NIC 62 and an output port that transmits the packets to the router 63a, and transmits the packets received from the NIC 62 through the input port to the router 63a through the output port.

As illustrated in portion (A) of FIG. 13, the router 63 has plural input ports that receive the packets from computation nodes other than the computation nodes 60 to 60e. When the packets where the transmission destinations are the same are simultaneously received from the computation nodes other than the computation nodes 60 to 60e and the plural input ports receiving the packets from the NIC 62, the router 63 performs adjustment between the input ports and sequentially transmits the received packets to the router 63a.

In this case, when each of the routers 63 to 63e each performs adjustment between the ports using a round-robin system, because the parallel computer system 50 may not find the priority between the ports viewed from the entire parallel computer system 50, the parallel computer system 50 attempts to influence the input ports to win fairly. For this reason, it is difficult to equally allocate a band to communication between the computation nodes 60 to 60e by the parallel computer system 50.

Next, a description will be made regarding an example of the case where the packets are transmitted from the CPUs 61 to 61d to the CPU 61e and the packets always join the two receiving ports in the routers 63 to 63d as illustrated in portion (A) to (E) of FIG. 13. In this case, since the routers 63 to 63d transmit the packets received from the four receiving ports using the round-robin system, the routers 63 to 63d equally allocate the bands of the output ports thereof to the four receiving ports thereof.

For this reason, the parallel computer system 50 can allocate "1/4" of the entire band to the communication between the computation node 60d and the computation node 60e. However, since the routers 63 to 63d each allocate "1/4" of the bands in the output ports to the communication between the computation node 60 and the computation node 60e, the parallel computer system 50 can allocate only about "(1/4)⁵" of the entire band.

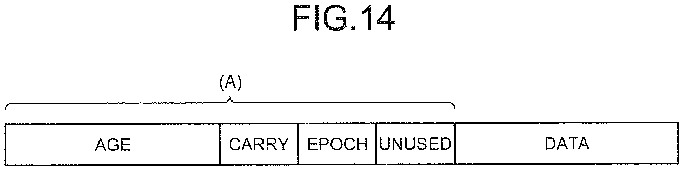

Therefore, there is known a technology for storing a passage time after transmitting packets, or the number of routers relaying the packets as age information in headers of the packets and for performing adjustment on the basis of the age information stored in the headers of the packets. FIG. 14 is a diagram illustrating the packet where the age information is provided. As illustrated in portion (A) of FIG. 14, the age information is stored in a header portion of transmitted data, which has a field where "age" of 7 bits is stored, a field where "carry" of 1 bit is stored, and a field where "epoch" of 1 bit is stored.

In this case, in the "age", a passage time after packet transmission or the number of routers relaying the packets is stored. In the "carry", carryout bits are stored. In the "epoch", information that is referenced when the age information is updated is stored. In addition, "unused" of 1 bit is a non-used area.

When the parallel computer system 50 performs adjustment on the basis of the age information stored in the packet, a control parameter of the age information is previously set according to the topology of a network connecting the plural computation nodes included in the parallel computer system 50 or a scale of a job executed by the computation nodes 60 to 60e. For example, "AGE_CLOCK_PERIOD" that illustrates a time interval to add a value stored in "age" is set as a control parameter. In addition, "REQ_AGE_BIAS" and "RSP_AGE__BIAS" that illustrate values of the age to be added when the packet hops the router once are set as control parameters. In addition, "'AGE_RR_SELECT" that illustrates a ratio in which the routers 63 to 63e perform the adjustment using the round-robin system and a ratio in which the routers 63 to 63e perform the adjustment using the age information is set as a control parameter.

When the routers 63 to 63e perform the adjustment on the basis of the age information, the routers 63 to 63e update the age information of the packets received on the basis of the set control parameters and compare the updated "age". The routers 63 to 63e transmit the packets to the next router sequentially from the packets where the values stored in the "age" are large. The parallel computer system 50 that has the routers 63 to 63e preferentially transmits the packets where the passage time after the packet is transmitted by the computation node of the transmission origin or the movement distance is large. Therefore, the wider band is allocated as the distance between the computation nodes performing the communication is longer.

However, according to the technology for performing the adjustment using the age information, the band is distributed on the basis of information indicating latency such as the passage time after the packets are transmitted by the computation node or the number of routers relaying the packets. For this reason, there lies a problem that the routers 63 to 63e do not appropriately distribute the band to the communication between the computation nodes.

That is, a process of adjusting the competition between the input ports is different from a process of adjusting the latency of the packets and is a process of distributing the band of the parallel computer system 50 to the communication between the computation nodes 60 to 60e. For this reason, the band may not be appropriately distributed to the communication between the computation nodes 60 to 60e, using the information of the latency that is different from the information of the band.

If the parallel computer system 50 performs the adjustment using the information indicating the latency when the computation nodes 60 to 60e perform multi-point to multi-point communication, the parallel computer system 50 may not equalize the number of routers relaying the packets. That is, since the parallel computer system 50 may not equalize the deviation of the latency of the packets, the parallel computer system 50 may not appropriately allocate the band to the communication between the computation nodes 60 to 60e.

Since the routers 63 to 63e store the passage time after the packet transmission or the number of routers relaying the packets in the "age", the bit width of the field that stores the "age" increases. For this reason, there have been problems that the bit width of the field that stores the data decreases and data transmission efficiency may be deteriorated in the communication between the computation nodes.

A technology that is discussed in the embodiments has been made in view of the above problems and appropriately distributes a band to communication between computation nodes without deteriorating data transmission efficiency.

### SUMMARY

According to an aspect of an embodiment of the invention, a data transmitting device includes a receiving unit that receives data from a plurality of computation nodes transmitting data each other. The data transmitting device further includes an acquiring unit that acquires a cumulative number of other data being counterparts of adjustment performed by the computation nodes until the data is received by the receiving unit from each received data. The data transmitting device further includes an updating unit that updates the cumulative number acquired from each data by the acquiring unit, on the basis of a number of the data received by the receiving unit. The data transmitting device further includes an adjusting unit that adjusts the data received by the receiving unit on the basis of the cumulative number updated by the updating unit, and selects data to be transmitted to the computation nodes. The data transmitting device further includes a storing unit that stores the cumulative number updated by the updating unit in the data selected by the selecting unit. The data transmitting device further includes a transmitting unit that transmits the data in which the cumulative number is stored by the storing unit to the other device.

### BRIEF DESCRIPTION OF DRAWINGS

FIG. 1 is a diagram illustrating an example of a parallel computer system according to a first embodiment;
FIG. 2 is a diagram illustrating an example of a packet that is transmitted and received between computation nodes according to the first embodiment;
FIG. 3 is a diagram illustrating an example of a router according to the first embodiment;
FIG. 4 is a diagram illustrating an example of an adjusting circuit related to a port 2;
FIG. 5 is a diagram illustrating an example of a process of allocating a band by the parallel computer system in the first embodiment;
FIG. 6 is a diagram illustrating an application example of the computation node in the first embodiment;
FIG. 7 is a diagram illustrating the parallel computer system that has the computation nodes to be connected by a meshed network;
FIG. 8 is a diagram illustrating a computation node transmitting a packet and a computation node receiving a packet;
Fig. 9 is a diagram illustrating an example of a packet transmission path;
FIG. 10 is a diagram illustrating a tree structure of a packet transmission path;
FIG. 11 is a diagram illustrating a value of the joining number that is stored in the packet flowing through each path;
FIG. 12 is a flowchart illustrating an example of a process of adjusting the packet by the router in the first embodiment;
FIG. 13 is a diagram illustrating an example of a plurality of computation nodes that are included in a parallel computer system; and
FIG. 14 is a diagram illustrating packets where age information is provided.

### DESCRIPTION OF EMBODIMENTS

Preferred embodiments of the present invention will be explained with reference to accompanying drawings. Herein, a data transmitting device, a parallel computer system, and a data transmitting device control method according to the embodiments will be described with reference to the accompanying drawings.

### [a] First Embodiment

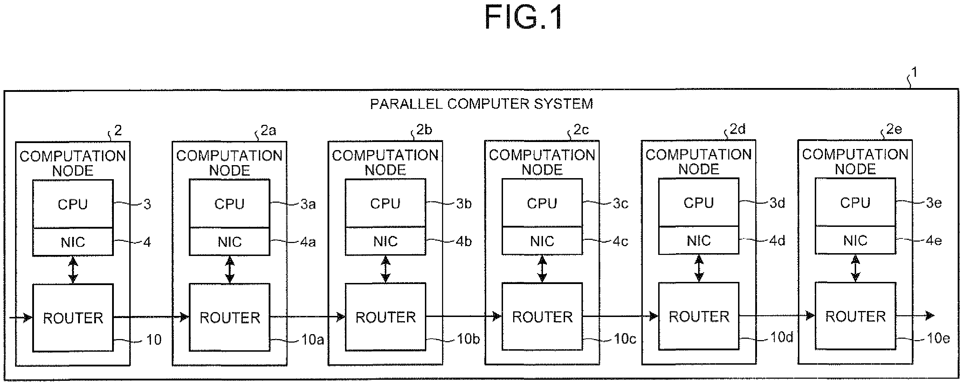

In the following first embodiment, an example of a parallel computer system 1 will be described using FIG. 1. FIG. 1 is a diagram illustrating an example of a parallel computer system according to the first embodiment. The parallel computer system 1 is a kind of a parallel computer that has at least plural computation nodes having routers, the computation nodes performing communication with each other.

As illustrated in FIG. 1, the parallel computer system 1 has plural nodes 2 to 2e. The parallel computer system 1 has plural computation nodes other than the computation nodes 2 to 2e, which is not illustrated in FIG. 1. The computation nodes 2a to 2e execute the same process as that of the computation node 2 and the description will not be repeated.

The computation node 2 is an information processing device that processes information. Specifically, the computation node 2 has a CPU 3, a NIC 4, and a router 10. The CPU 3 is an operation processing device that executes an operation. For example, the CPU 3 executes an operation process of the task that is allocated to the computation node 2. When the CPU 3 transmits data to CPUs 3a to 3e of the other computation nodes 2a to 2e, the CPU 3 transmits an identifier indicating a CPU of the transmission destination and data to be transmitted to the NIC 4.

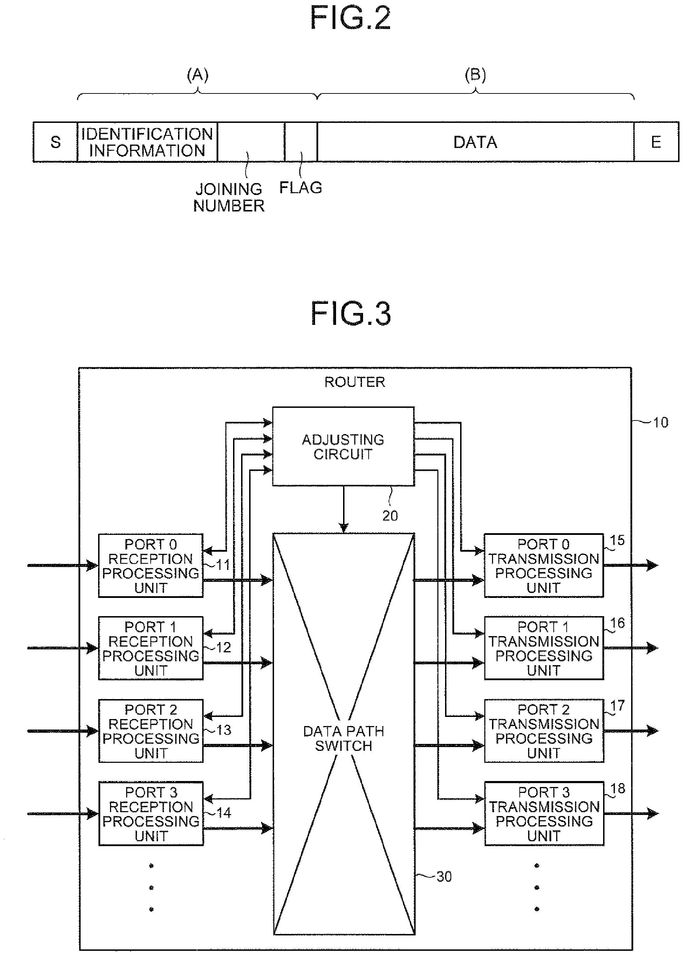

The NIC 4 packetizes the data received from the CPU 3 and transmits the packet data to the router 10. FIG. 2 is a diagram illustrating an example of a packet that is transmitted and received between the computation nodes according to the first embodiment. In the example illustrated in FIG. 2, the packet has a header portion that is illustrated by (A) of FIG. 2 and a data portion that is illustrated by (B) of FIG. 2. A starting symbol (S) of the packet is added to a head of the packet and an ending symbol (E) is added to a tail of the packet. A function of the NIC 4 may be exhibited by integrating another Interface function such as a memory and the function of the NIC 4 in one chip or disposing a processing device exhibiting the equivalent function in the CPU 3.

As illustrated by (A) of FIG. 2, the header portion of the packet has an area to store identification information indicating the destination of the packet or the size of the packet and an area to store the joining number to be the cumulative number of the other packets competing the packets in an adjustment process that the packets participate in. As illustrated by (A) of FIG. 2, the header portion of the packet has an area to store a flag designating whether the adjustment is performed using the joining number. As illustrated by (B) of FIG. 2, an area to store data transmitted from the CPU 3 to the other CPUs 3a to 3e is set to the data portion of the packet.

For example, when the NIC 4 receives data to be transmitted from the CPU 3 to the CPU 3e, the NIC 4 stores the received data in the data portion of the packet and stores the identification information indicating the destination of the packet as the CPU 3e in the header. The NIC 4 stores an initial value "1" of the joining number and stores the flag that designates performing the adjustment using the joining number. Then, the NIC 4 transmits the packet where each information is stored to the router 10.

Returning to FIG. 1, the router 10 is a transmitting device that transmits a received packet to a router 10a, when the router 10 receives the packet from the NIC 4 or a computation node not illustrated in the drawings. Specifically, when the router 10 receives plural packets, the router 10 acquires the joining number stored in each packet and updates the joining number according to the number of received packets. The router 10 selects the packet to be transmitted to the router 10a, from the received plural packets, on the basis of the updated joining number. Then, the router 10 stores the updated joining number in the selected packet and transmits the packet where the updated joining number is stored to the router 10a.

Herein, a specific example of a process that is executed by the router 10 will be described using the drawing. FIG. 3 is a diagram illustrating an example of the router according to the first embodiment. In the example illustrated in FIG. 3, the router 10 has a port 0 reception processing unit 11, a port 1 reception processing unit 12, a port 2 reception processing unit 13, a port 3 reception processing unit 14, a port 0 transmission processing unit 15, a port 1 transmission processing unit 16, a port 2 transmission processing unit 17, and a port 3 transmission processing unit 18. The router 10 has an adjusting circuit 20 and a data path switch 30.

An arrow that is illustrated by a thick line of FIG. 3 illustrates a path of a packet and an arrow that is illustrated by a minute line of FIG. 3 illustrates a path of data by a control line of the adjusting circuit 20. The port 0 reception processing unit 11 and the port 0 transmission processing unit 15 are the reception processing unit 11 and the transmission processing unit 15 related to the same port 0. The port 1 reception processing unit 12 and the port 1 transmission processing unit 16 are the reception processing unit 12 and the transmission processing unit 16 related to the same port 1. The port 2 reception processing unit 13 and the port 2 transmission processing unit 17 are the reception processing unit 13 and the transmission processing unit 17 related to the same port 2. The port 3 reception processing unit 14 and the port 3 transmission processing unit 18 are the reception processing unit 14 and the transmission processing unit 18 related to the same port 3.

In the description below, the port 0, the port 1, and the port 3 and the port 4 are connected to the NIC 4, the computation node 2a, and other computation nodes adjacent to the computation node 2 by a physical link, respectively. The processes that are executed by the port 1 reception processing unit 12, the port 2 reception processing unit 13, and the port 3 reception processing unit 14 are the same as the process executed by the port 0 reception processing unit 11 and the description will not be repeated. The processes that are executed by the port 1 transmission processing unit 16, the port 2 transmission processing unit 17, and the port 3 transmission processing unit 18 are the same as the process executed by the port 0 transmission processing unit 15 and the description will not be repeated.

When the port 0 reception processing unit 11 receives the packet, the port 0 reception processing unit 11 determines the transmission destination of the received packet. The port 0 reception processing unit 11 transmits a transmission request to the transmission processing unit of the port corresponding to the transmission destination of the received packet to the adjusting circuit 20. The port 0 reception processing unit 11 acquires the joining number from a header portion of the received packet and transmits the acquired joining number to the adjusting circuit 20. When the port 0 reception processing unit 11 receives the transmission permission notification from the adjusting circuit 20, the port 0 reception processing unit 11 transmits the received packet to the data path switch 30.

For example, when the port 0 reception processing unit 11 receives the packet where the computation node 2 is the destination, the port 0 reception processing unit 11 transmits a transmission request to the port 0 to the adjusting circuit 20. When the port 0 reception processing unit 11 receives the packet where the computation nodes 2a to 2e are the destination, the port 0 reception processing unit 11 transmits a transmission request to the port 1 to the adjusting circuit 20.

When the packet where the computation node 2 is the destination is selected by the adjusting circuit 20 to be described below, the port 0 transmission processing unit 15 receives the packet through the data path switch 30. In this case, the port 0 transmission processing unit 15 transmits the received packet to the NIC 4. Similar to the above case, when the port 1 transmission processing unit 16 receives the packet where the computation nodes 2a to 2e are the destination, that is, the packet transmitted to the computation node 2a through the data path switch 30, the port 1 transmission processing unit 16 transmits the received packet to the computation node 2a.

The transmission processing units 15 to 18 of the ports receive the packets through the data path switch 30. The transmission processing units 15 to 18 of the ports receive the joining number from the adjusting circuit 20. The transmission processing units 15 to 18 of the ports store the joining number received from the adjusting circuit 20 as a new joining number in the header of the packet received from the data path switch 30. Then, the transmission processing units 15 to 18 of the ports transmit the packet where the new joining number is stored to the NIC 4 or the computation node connected to the transmission processing units.

The selection of the port that transmits the packet depends on the destination of each packet. For example, in the case of fixed routing, the port that transmits the packet according to destination information of the packet header is uniquely determined. In the case of adaptive routing, the port that transmits the packet is determined according to an adopted algorithm.

In this case, when the packets are received from the plural ports, if the transmitting ports determined from the destinations of the received packets are the same, the competition is generated in the transmission processing units of the transmitting ports. In this case, the packet to be transmitted is selected by the adjusting circuit 20 to be described below. Then, the reception processing unit of the port that receives the selected packet transmits the packet to the transmission processing unit of the transmitting port through the data path switch 3. The transmission processing unit that receives the packet transmits the packet to the NIC 4 or the computation node connected to the transmission processing unit, after updating the joining number of the received packets.

For example, when the port 0 reception processing unit 11 receives the packet transmitted through the port 1 transmission processing unit 16, the port 1 reception processing unit 12 receives the packet transmitted through the port 2 transmission processing unit 17, and the port 2 reception processing unit 13 receives the packet transmitted through the port 1 transmission processing unit 16, the router 10 executes the following process.

That is, the router 10 adjusts the packet received by the port 0 reception processing unit 11 and the packet received by the port 2 reception processing unit 13. In this case, when the adjusting circuit 20 selects the packet received by the port 0 reception processing unit 11, the router 10 transmits the packet received by the port 0 reception processing unit 11 through the port 1 transmission processing unit 16 and the port 2 reception processing unit 13 transmits the packet through the port 1 transmission processing unit 16. That is, when resources (that is, transmission processing units 15 to 18) of the ports that transmit the packets do not compete with respect to the received plural packets, the received plural packets are simultaneously transmitted in parallel.

The adjusting circuit 20 determines whether the competition is generated with respect to each port, on the basis of the transmission request received from each of the reception processing units 11 to 14. When it is determined that the competition is generated in any port, the adjusting circuit 20 executes the following process with respect to the ports where the competition is generated. That is, the adjusting circuit 20 updates the joining number received from each of the reception processing units 11 to 14, on the basis of the number of packets received from each of the reception processing units 11 to 14. The adjusting circuit 20 performs the adjustment with respect to the port transmitting the packet, on the basis of the updated joining number. Then, the adjusting circuit 20 transmits transmission permission to the reception processing unit that receives the packet wining for the adjustment and transmits the updated joining number to the transmission processing unit of the port transmitting the packet.

Meanwhile, the adjusting circuit 20 executes the following process with respect to the port where the competition is not generated. That is, the adjusting circuit 20 transmits the transmission permission to the reception processing unit that receives the packet to be transmitted using the port where the competition is not generated.

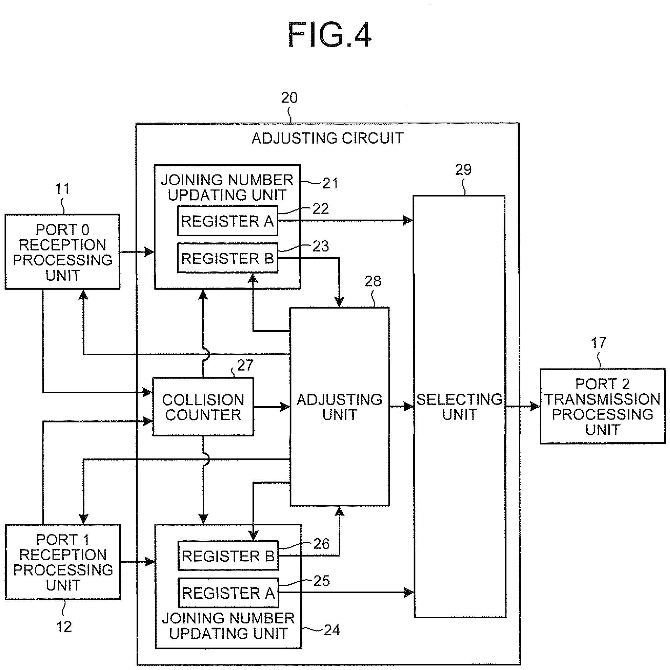

Herein, an example of a process of adjusting the packet received by the router 10 and selecting the packet to be transmitted to the router 10a by the adjusting circuit 20 will be described using the drawing. FIG. 4 is a diagram illustrating an example of the adjusting circuit related to the port 2. The adjusting circuit 20 illustrated in FIG. 4 is an adjusting circuit that is obtained by extracting a circuit portion performing adjustment with respect to the port 2, in the adjusting circuit 20 illustrated in FIG. 3.

That is, the adjusting circuit 20 illustrated in FIG. 3 is a circuit that performs the adjustment with respect to each of the ports 0 to 3. The adjusting circuit 20 has the same circuit as the circuit portion performing the adjustment with respect to the port 2 illustrated in FIG. 4 as a circuit portion performing the adjustment with respect to each of the ports 0, 1, and 3. In the description below, an example of a process that is executed by the adjusting circuit 20 when the port 0 reception processing unit 11 and the port 1 reception processing unit 12 receive the packet transmitted through the port 2 transmission processing unit 17 is described. In FIG. 4, the port 2 reception processing unit 13, the port 3 reception processing unit 14, the port 0 transmission processing unit 15, the port 1 transmission processing unit 16, and the port 3 transmission processing unit 18 are not illustrated.

In an example illustrated in FIG. 4, the adjusting circuit 20 has a joining number updating unit 21, a joining number updating unit 24, a collision counter 27, an adjusting unit 28, and a selecting unit 29. The joining number updating unit 21 is associated with the port 0 reception processing unit 11 and has a register A 22 and a register B 23 that store the joining number acquired from the packets received by the port 0 reception processing unit 11. Specifically, when the joining number updating unit 21 receives the joining number from the port 0 reception processing unit 11, the joining number updating unit 21 stores the received joining number in the register A 22 and the register B 23.

When the joining number updating unit 21 receives the collision number from the collision counter 27, the joining number updating unit 21 adds a value obtained by subtracting 1 from the received collision number to the value stored in the register A 22 and the register B 23. When the joining number updating unit 21 receives information indicating adjustment loss from the adjusting unit 28, the joining number updating unit 21 adds 1 to the value stored in the register B 23. When the joining number updating unit 21 receives transmission permission from the adjusting unit 28, the joining number updating unit 21 transmits the value stored in the register A 22 to the selecting unit 29.

The joining number updating unit 24 is associated with the port 1 reception processing unit 12. When the joining number updating unit 24 receives the joining number from the port 1 reception processing unit 12, the joining number updating unit 24 stores the received joining number in a register A 25 and a register B 26. When the joining number updating unit 24 receives the collision number from the collision counter 27, the joining number updating unit 24 adds a value obtained by subtracting 1 from the received collision number to the value stored in the register B 26. When the joining number updating unit 24 receives information indicating adjustment loss from the adjusting unit 28, the joining number updating unit 24 adds 1 to the value stored in the register B 26. When the joining number updating unit 24 receives the transmission permission from the adjusting unit 28, the joining number updating unit 24 transmits the value stored in the register A 25 to the selecting unit 29.

When the collision counter 27 receives the transmission requests from the port 0 reception processing unit 11 and the port 1 reception processing unit 12, the collision counter 27 counts the number of received transmission requests and transmits the counted number as the collision number to the joining number updating units 21 and 24. When the collision counter 27 receives the transmission requests from the plural reception processing units, that is, the port 0 reception processing unit 11 and the port 1 reception processing unit 12, the collision counter 27 transmits information indicating execution of the adjustment to the adjusting unit 28.

When the adjusting unit 28 receives the information indicating the execution of the adjustment, the adjusting unit 28 acquires the value stored in the register B 23 of the joining number updating unit 21 and the value stored in the register B 26 of the joining number updating unit 24. The adjusting unit 28 compares the acquired values, transmits the transmission permission to the joining number updating unit where the largest value is stored and the reception processing unit associated with the joining number updating unit, and transmits the information indicating the adjustment loss to the other joining number updating unit.

When there are a plurality of largest values among the acquired values, the adjusting unit 28 selects any one of the joining number updating units where the largest values are stored, using the round-robin system. The adjusting unit 28 transmits the transmission permission to the selected joining number updating unit and the reception processing unit associated with the selected joining number updating unit.

For example, when the value stored in the register B 23 is larger than the value stored in the register B 26, the adjusting unit 28 transmits the transmission permission to the port 0 reception processing unit 11 and the joining number updating unit 21, and transmits the information indicating the adjustment loss to the joining number updating unit 24. When the value stored in the register B 26 is larger than the value stored in the register B 23, the adjusting unit 28 transmits the transmission permission to the port 1 reception processing unit 12 and the joining number updating unit 24 and transmits the information indicating the adjustment loss to the joining number updating unit 21.

In this case, when the joining number updating units 21 and 24 receive the information indicating the adjustment loss from the adjusting unit 28, the joining number updating units 21 and 24 add 1 to the values stored in the registers B 23 and 26. The adjusting unit 28 selects the packets to be transmitted to the router 10a, on the basis of the values stored in the registers B 23 and 26. That is, the adjusting unit 28 selects the packet to be transmitted to the router 10a, on the basis of the value obtained by adding the number of times of the adjustment loss of the packet to the value updated according to the number of packets receiving the joining number stored in the received packets. As a result, the adjusting unit 28 can avoid deadlock in an adjusting process.

When the adjusting unit 28 selects the transmitted packet, the adjusting unit 28 transmits the information indicating the port receiving the selected packets to the selecting unit 29 and the data path switch 30 illustrated in FIG. 3.

When the selecting unit 29 receives the information indicating the port from the adjusting unit 28, the selecting unit 29 transmits the joining number that is transmitted from the joining number updating unit associated with the port indicated by the received information, to the port 2 transmission processing unit 17. That is, since the adjusting unit 28 illustrated in FIG. 4 is an adjusting unit with respect to the port 2, the selecting unit 29 transmits the joining number that is acquired from the packet received by the port indicated by the information received from the adjusting unit 28 and is updated by the competition, to the transmission processing unit 17 of the port 2 related to the adjusting unit 28.

For example, when the selecting unit 29 receives the information indicating the port 0 from the adjusting unit 28, the selecting unit 29 transmits the joining number transmitted from the joining number updating unit 21 to the port 2 transmission processing unit 17. When the selecting unit 29 receives the information indicating the port 1 from the adjusting unit 28, the selecting unit 29 transmits the joining number transmitted from the joining number updating unit 24 to the port 2 transmission processing unit 17.

The adjusting process may perform adjustment with respect to one packet. That is, when values are not stored in the register A or the register B of one joining number updating unit, the adjusting unit 28 determines that "0" is stored and performs the adjustment. In this case, even when the competition is not generated, because the adjusting circuit 20 appropriately transmits the packet to the transmission processing unit of the port to transmit the packet, mounting becomes easy. The adjusting circuit 20 outputs only the joining number of packets of winners with respect to the values of the register A 22 and the register A 25 output from the joining number updating units 21 and 24, and outputs a value "0" in the other cases, the selecting unit 29 is not needed.

As such, the adjusting circuit 20 acquires the joining number stored in the packets received by the ports 0 and 1 and updates the acquired joining number according to the number of packets. The adjusting circuit 20 selects the packet where the updated joining number is largest as the packet to be transmitted to the router 10a. For this reason, the adjusting circuit 20 can equally allocate the band to the communication between the computation nodes 2 to 2e.

Returning to FIG. 3, when the data path switch 30 receives information indicating the port from the adjusting unit 28 of the circuit related to the port illustrated in FIG. 4 in the adjusting circuit 20, the data path switch 30 transmits the packet received from the reception processing unit of the port indicated by the received information to the port 2 transmission processing unit 17. For example, when the data path switch 30 receives the information indicating the port 0 from the adjusting unit 28, the data path switch 30 transmits the packet received from the port 0 reception processing unit 11 to the port 2 transmission processing unit 17. When the data path switch 30 receives information indicating the port 0 from the adjusting unit of the circuit related to the port 3 in the adjusting circuit 20, the data path switch 30 transmits the packet received from the port 0 reception processing unit 11 to the port 3 transmission processing unit 18.

When the packet may not be transmitted such as when the packet may not be received due to exhaustion of resources of the router 10a, the router 10 may not perform the adjustment and may not update the joining number of each packet. As such, the transmission destination may not receive the packet because the transmission destination is a joining point where the transmission destination shares the band with the plural communications. This state can be resolved using a process such as adaptive routing.

For example, the CPUs 3 to 3e, the reception processing units 11 to 14, the transmission processing units 15 to 18, the adjusting circuit 20, the joining number updating units 21 and 24, the collision counter 27, and the adjusting unit 28 form an electronic circuit. In this case, as an example of the electronic circuit, an integrated circuit such as an application specific integrated circuit (ASIC) or a field programmable gate array (FPGA) and a central processing unit (CPU) or a micro processing unit (MPU) are applied.

Each of the register A 22, the register A 25, the register B 23, and the register B 26 is a semiconductor memory element such as a random access memory (RAM) or a flash memory. Each of the selecting unit 29 and the data path switch 30 is a switch that changes the output destination of the packet using information notified from the adjusting unit 28.

As described above, when the router 10 receives the packet, the router 10 acquires the joining number to be the cumulative number of the number of the other packets competing with each packet in the adjusting process that each packet participates in. The router 10 updates the acquired joining number according to the number of received packets, that is, the number of the other packets competing in the adjustment.

In this case, the joining number that is stored in each packet is the cumulative number of the number of the other packets that the packet competes and is a value that indicates an overlapping degree of the communications sharing the band. That is, the joining number that is stored in each packet is directly related to the band allocated to the communication sharing the band. For this reason, when the router 10 performs the adjustment on the basis of the joining number stored in each packet, the router 10 can perform the adjustment on the basis of the information indicating the band. Therefore, the band can appropriately be allocated to the communication between the computation nodes 2 to 2e.

An example of the case where each of the computation nodes 2 to 2d illustrated in FIG. 1 transmits the packet to the computation node 2e will be described. For example, when each of the routers 10 to 10e performs the adjustment of the packet received using the round-robin system, similar to the related art, "1/2" of the entire band is allocated to all of the communications. In addition, "1/4" of the entire band is allocated to the communication between the computation node 2c and the computation node 2e and "1/8" of the entire band is allocated to the communication between the computation node 2b and the computation node 2e.

In addition, "1/16" of the entire band is allocated to the communication between the computation node 2a and the computation node 2e and the other band of "1/16" is allocated to the communication between the computation node 2 and the computation node 2e. As such, when each of the routers 10 to 10e performs the adjustment of the packet using the round-robin system, the parallel computer system 1 can allocate only the narrow band to the communication where the hopping number of the packet is large and therefore, it is not said that the parallel computer system 1 can perform appropriate allocation of the band. When the transmission destination ports compete between the plural ports, the band that is allocated to the communication between the computation nodes 2 to 2e is narrowed.

In this case, when each of the routers 10 to 10e makes the packet where the joining number stored in each packet is largest win for the adjustment, the packet in the communication between the computation node 2d and the computation node 2e wins for the adjustment with a ratio of 1/5. For this reason, "1/5" of the entire band is allocated to the communication between the computation node 2d and the computation node 2e. Since the packet in the communication between the computation node 2c and the computation node 2e wins for the adjustment with a ratio of 1/4, "1/4" of the remaining band "1 - 1/5 = 4/5" is allocated. As a result, "1/5" of the entire band is allocated to the communication between the computation node 2c and the computation node 2e.

Since the packet in the communication between the computation node 2b and the computation node 2e wins for the adjustment with a ratio of 1/3, "1/5" that is "1/3" of the remaining band "1 - 2/5" is allocated to the communication between the computation node 2b and the computation node 2e. Since the packet in the communication between the computation node 2a and the computation node 2e wins for the adjustment with a ratio of 1/2, "1/5" that is "1/2" of the remaining band "1 - 3/5" is allocated to the communication between the computation node 2a and the computation node 2e. To the communication between the computation node 2 and the computation node 2e, the remaining band "1/5" is allocated. That is, when the parallel computer system 1 makes the packet where the joining number is largest win for the adjustment, the parallel computer system 1 can equally allocate the band to the communication between the computation nodes.

Next, the simulation result of a process of allocating the band by the parallel computer system 1 will be described. First, the simulation result of the band that is allocated to the communication between each of the computation nodes 2 to 2d and the computation node 2e when each of the computation nodes 2 to 2d illustrated in FIG. 1 transmits the packet to the computation node 2e will be described. In the simulation, an example of the case where 10000 packets that have random sizes requiring 1 to 32 cycles at the time of the transmission are randomly allocated to the computation nodes 2 to 2d and each of the computation nodes 2 to 2d transmits the packet allocated to each computation node to the computation node 2e is simulated.

Under these conditions, when each of the routers 10 to 10d performs adjustment of the packet using the round-robin system, the parallel computer system 1 allocates "50.0%" band of the entire band to the communication between the computation node 2d and the computation node 2e. The parallel computer system 1 allocates the band of "25.0%" to the communication between the computation node 2c and the computation node 2e and allocates the band of "12.8%" to the communication between the computation node 2b and the computation node 2e.

The parallel computer system 1 allocates the band of "6.1%" to the communication between the computation node 2a and the computation node 2e and allocates the band of "6.5%" to the communication between the computation node 2 and the computation node 2e. As such, if the routers 10 to 10d of the computation nodes 2 to 2d perform the adjustment of the packet using the round-robin system when one packet joins whenever each packet hops each of the computation nodes 2a to 2d, the band decreases to "1/2" whenever the hoping number of the packet in the communication between each of the computation nodes 2 to 2d and the computation node 2e increases by "1'.

Meanwhile, under the same conditions, when each of the routers 10 to 10d makes the packet where the joining number is largest win for the adjustment, the parallel computer system 1 allocates "20.2%" of the entire band to the communication between the computation node 2d and the computation node 2e. The parallel computer system 1 allocates the band of "19.8%" to the communication between the computation node 2c and the computation node 2e and allocates the band of "19.4%" to the communication between the computation node 2b and the computation node 2e. The parallel computer system 1 allocates the band of "20.8%" to the communication between the computation node 2a and the computation node 2e and allocates the band of "20.1%" to the communication between the computation node 2 and the computation node 2e. As such, if each of the routers 10 to 10e makes the packet where the joining number is largest win for the adjustment, the parallel computer system 1 can equally allocate the band to the communication between each of the computation nodes 2 to 2d and the computation node 2e.

Next, the simulation result in an example of the case where each of the computation nodes 2 to 2d transmits the packet to the computation node 2e and the packets transmitted from the computation nodes other than the computation nodes 2 to 2e to the computation node 2e always join will be described. In this simulation, an example of the case where the 10000 packets that have random sizes requiring 1 to 32 cycles at the time of the transmission are allocated to the computation nodes 2 to 2d and each of the computation nodes 2 to 2d transmits the packet allocated to each computation node to the computation node 2e is simulated.

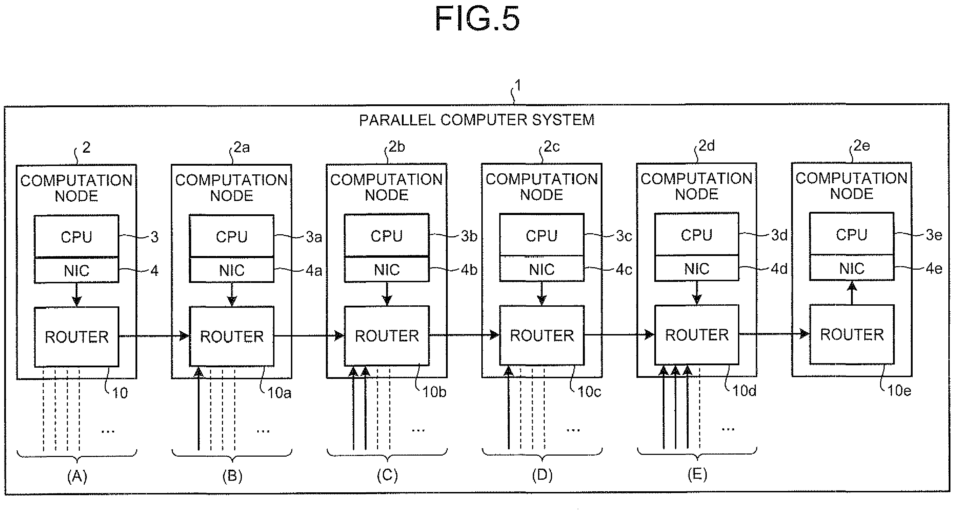

FIG. 5 is a diagram illustrating an example of a process of allocating the band by the parallel computer system in the first embodiment. As illustrated in (A) of FIG. 5, in the router 10 of the computation node 2, the packets that are transmitted from the computation nodes other than the computation nodes 2 to 2e to the computation node 2e do not join. As illustrated in (B) of FIG. 5, in the router 10a of the computation node 2a, the packets that are transmitted from the computation nodes other than the computation nodes 2 to 2e to the computation node 2e always join by "1". As illustrated in (C) of FIG. 5, in the router 10b of the computation node 2b, the packets that are transmitted from the computation nodes other than the computation nodes 2 to 2e to the computation node 2e always join by "2".

As illustrated in (D) of FIG. 5, in the router 10c of the computation node 2c, the packets that are transmitted from the computation nodes other than the computation nodes 2 to 2e to the computation node 2e always join by "1"'. As illustrated in (E) of FIG. 5, in the router 10d of the computation node 2d, the packets that are transmitted from the computation nodes other than the computation nodes 2 to 2e to the computation node 2e always join by "3".

Under these conditions, when each of the routers 10 to 10d performs adjustment of the packet using the round-robin system, the parallel computer system 1 allocates "19.9%" of the band between the computation node 2d and the computation node 2e to the communication between the computation node 2d and the computation node 2e. The parallel computer system 1 allocates "19.8%", "20.4%", and "19.9%" of the band between the computation node 2d and the computation node 2e to the three communications joining in the computation node 2d, that is, the three communications joining from the computation node 2c and the potions other than a NIC 4d to the computation node 2d, respectively.

The parallel computer system 1 allocates "6.6%" of the band between the computation node 2d and the computation node 2e to the communication between the computation node 2c and the computation node 2e and allocates "6.6%" of the band between the computation node 2d and the computation node 2e to the communication from the computation node 2b and the communications other than the communication from a NIC 4c joining in the computation node 2c. The parallel computer system 1 allocates "1.8%" of the band between the computation node 2d and the computation node 2e to the communication between the computation node 2b and the computation node 2e and allocates "1.8%" and "1.6%" of the band between the computation node 2d and the computation node 2e to the communication from the computation node 2a and the two communications other than the communication from an NIC 4b joining in the computation node 2b.

The parallel computer system 1 allocates "0.6%" of the band between the computation node 2d and the computation node 2e to the communication between the computation node 2a and the computation node 2e and allocates "0.6%" of the band between the computation node 2d and the computation node 2e to the communication joining in from the computation node 2 and the communications other than the communication from a NIC 4a joining in the computation node 2a. In addition, the parallel computer system 1 allocates "0.7%" of the band between the computation node 2d and the computation node 2e to the communication between the computation node 2 and the computation node 2e. As such, when each of the routers 10 to 10d performs the adjustment of the packet using the round-robin system, the parallel computer system 1 may not equalize the band to each communication.

Meanwhile, under the same conditions, when each of the routers 10 to 10d makes the packet where the joining number is largest win for the adjustment, the parallel computer system 1 allocates "11.0%" of the band between the computation node 2d and the computation node 2e to the communication between the computation node 2d and the computation node 2e. The parallel computer system 1 allocates "11.1%", "11.1%", and "11.2%" of the band between the computation node 2d and the computation node 2e to the three communications joining in the computation node 2d, that is, the three communications joining from the computation node 2c and the portion other than the NIC 4d to the computation node 2d, respectively.

The parallel computer system 1 allocates "8.0%" of the band between the computation node 2d and the computation node 2e to the communication between the computation node 2c and the computation node 2e and allocates "8.0%" of the band between the computation node 2d and the computation node 2e to the communication from the computation node 2b and the communications other than the communication from the NIC 4c joining in the computation node 2c.

The parallel computer system 1 allocates "8.3%" of the band between the computation node 2d and the computation node 2e to the communication between the computation node 2b and the computation node 2e and allocates "8.5%" and "8.4%" of the band between the computation node 2d and the computation node 2e to the two communications joining in the computation node 2b, respectively. The parallel computer system 1 allocates "5.0%" of the band between the computation node 2d and the computation node 2e to the communication between the computation node 2a and the computation node 2e and allocates "4.8%" of the band between the computation node 2d and the computation node 2e to the communication from the computation node 2 and the communications other than the communication from the NIC 4a joining in the computation node 2a.

In addition, the parallel computer system 1 allocates "5.0%" of the entire band to the communication between the computation node 2 and the computation node 2e. As such, when each of the routers 10 to 10e makes the packet where the largest joining number is stored win for the adjustment, the parallel computer system 1 can suppress the deviation of the band allocated to each communication and can appropriately allocate the band to each communication.

Next, the simulation result in an example of the case where the packets transmitted from the computation nodes other than the computation nodes 2 to 2e to the random transmission destination always join and each of the computation nodes 2 to 2e performs the communication will be descried. The size of the packet that is transmitted from each computation node, the total number of packets, and the number of packets that join in the routers 10 to 10d from the computation nodes other than the computation nodes 2 to 2e are the same as those of the simulation described using FIG. 5.

Under these condition, when each of the routers 10 to 10e performs adjustment of the packet using the round-robin system, the parallel computer system 1 allocates "20.0%" of the band between the computation node 2d and the computation node 2e to the communication between the computation node 2d and the computation node 2e. The parallel computer system 1 allocates "20.0%" of the band between the computation node 2d and the computation node 2e to the three communications joining from the computation node 2c and the portions other than the NIC 4d to the computation node 2d.

The parallel computer system 1 allocates "7.5%" of the band between the computation node 2d and the computation node 2e to the communication between the computation node 2c and the computation node 2e and allocates "7.5%" of the band between the computation node 2d and the computation node 2e to the communication from the computation node 2b and the communications other than the communication from the NIC 4c joining in the computation node 2c. The parallel computer system 1 allocates "2.0%" of the band between the computation node 2d and the computation node 2e to the communication between the computation node 2b and the computation node 2e and allocates "2.0" of the band between the computation node 2d and the computation node 2e to the communication from the computation node 2a and the two communications other than the communication from the NIC 4b joining in the computation node 2b.

The parallel computer system 1 allocates "0.7%" of the band between the computation node 2d and the computation node 2e to the communication between the computation node 2a and the computation node 2e and allocates "0.7%" of the band between the computation node 2d and the computation node 2e to the communication from the computation node 2 and the communications other than the communication from the NIC 4a joining in the computation node 2a. In addition, the parallel computer system 1 allocates "0.8%" of the band between the computation node 2d and the computation node 2e to the communication between the computation node 2 and the computation node 2e.

Meanwhile, under the same conditions, when each of the routers 10 to 10d makes the packet where the joining number is largest win for the adjustment, the parallel computer system 1 allocates "11.1%"' of the band between the computation node 2d and the computation node 2e to the communication between the computation node 2d and the computation node 2e. The parallel computer system 1 allocates "11.1%" of the band between the computation node 2d and the computation node 2e to the three communications joining from the computation node 2c and the portions other than the NIC 4d to the computation node 2d.

The parallel computer system 1 allocates "10.4%" of the band between the computation node 2d and the computation node 2e to the communication between the computation node 2c and the computation node 2e and allocates "10.4%" of the band between the computation node 2d and the computation node 2e to the communication from the computation node 2b and the communications other than the communication from the NIC 4 joining in the computation node 2c. The parallel computer system 1 allocates "11.6%" of the band between the computation node 2d and the computation node 2e to the communication between the computation node 2b and the computation node 2e and allocates "11.6%" of the band between the computation node 2d and the computation node 2e to the communication from the computation node 2a and the two communications other than the communication from the NIC 4b joining in the computation node 2b.

The parallel computer system 1 allocates "8.3%" of the band between the computation node 2d and the computation node 2e to the communication between the computation node 2a and the computation node 2e and allocates "8.3%" of the band between the computation node 2d and the computation node 2e to the communication from the computation node 2 and the communications other than the communication from the NIC 4a joining in the computation node 2a. The parallel computer system 1 allocates "8.4%" of the band between the computation node 2d and the computation node 2e to the communication between the computation node 2 and the computation node 2e.

As such, when each of the routers 10 to 10d makes the packet where the joining number is largest win for the adjustment, the parallel computer system 1 can suppress a ratio of the maximum band and the minimum band allocated to each communication within a range of about "2:1". For this reason, the parallel computer system 1 can suppress the deviation of the band allocated to each communication and can appropriately allocate the band to each communication.

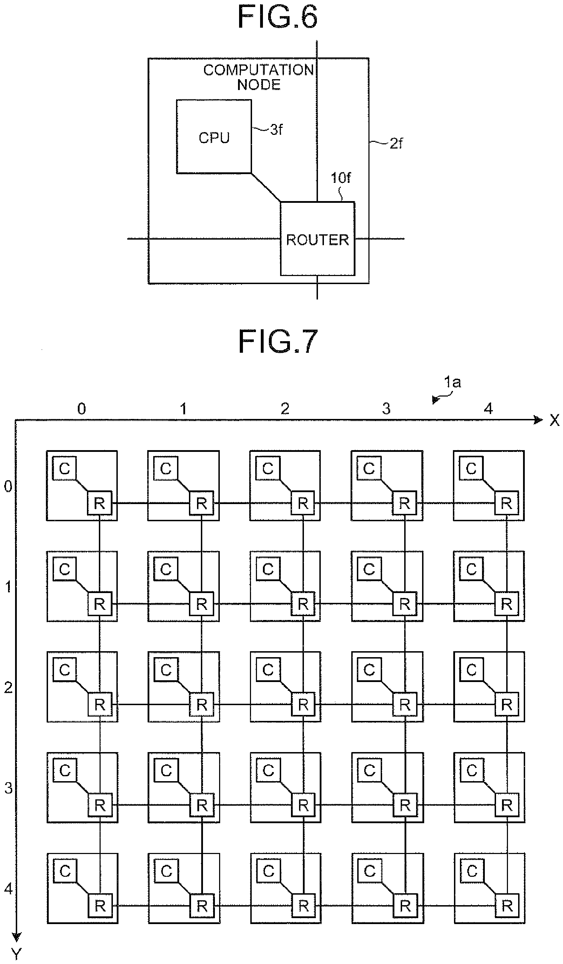

Next, an example of the case where the computation nodes in which the routers performing the adjustment on the basis of the joining number stored in the packets are disposed are connected by a meshed network will be described using FIGS. 6 to 11. FIG. 6 is a diagram illustrating an application example of the computation node in the first embodiment. In the example illustrated in FIG. 6, a computation node 2f has a CPU 3f and a router 10f. Since the computation node 2, the CPU 3f, and the router 10f exhibit the same functions as those of the computation node 2, the CPU 3, and the router 10, respectively, the operation description will be omitted. The CPU 3f has the function of the NIC 4.

FIG. 7 is a diagram illustrating a parallel computer system that has the computation nodes connected by the meshed network. A parallel computer system 1a illustrated in FIG. 7 has the topology where the 5 computation nodes provided in each of X-axis direction and a Y-axis direction are connected in a meshed shape. Each computation node illustrated in FIG. 7 is the same computation node as the computation node 1f. In FIG. 7, (C) illustrates a CPU of each computation node and "R" illustrates a router of each computation node.

Each computation node illustrated in FIG. 7 transmits the packet to the computation node becoming the transmission destination of the packet, by transmitting the packet by each router on the Y axis after transmitting the packet by each router on the X axis, in the routing to transmit the packet. However, this example is only an application example and the process that is executed by the router 10f can be applied to an arbitrary parallel computer system where an arbitrary routing system is applied, in addition to a network where the fixed routing is adopted.

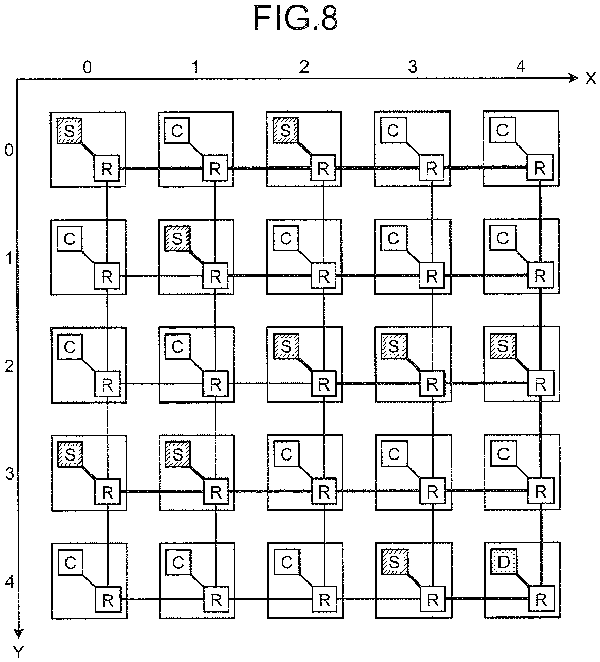

FIG. 8 is a diagram illustrating a computation node transmitting a packet and a computation node receiving a packet. For example, when the packet is transmitted from the computation node having the CPU illustrated by "S" of FIG. 8 to the computation node having the CPU illustrated by (D) of FIG. 8, the packet that is transmitted from each computation node is transmitted to follow a path illustrated by a thick line of FIG. 8.

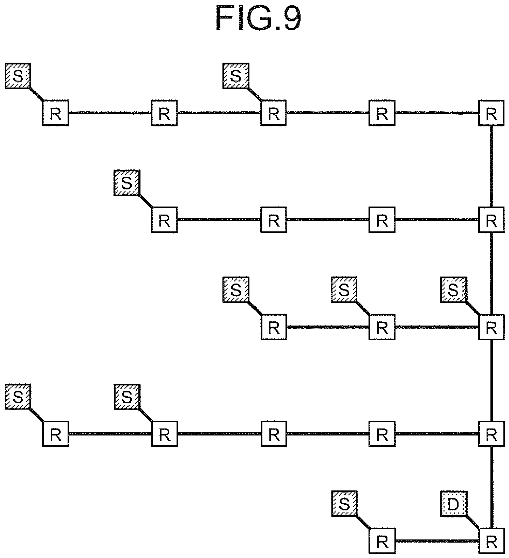

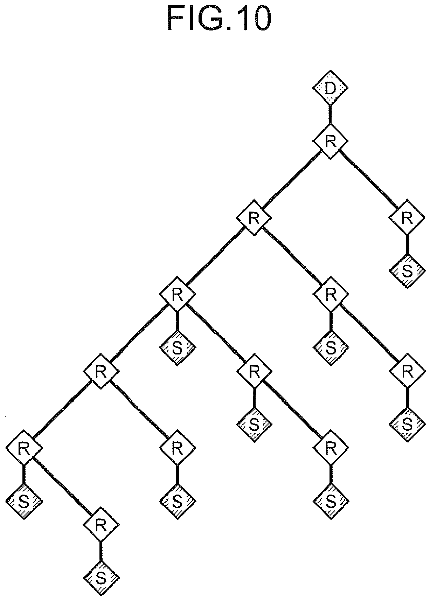

FIG. 9 is a diagram illustrating an example of a packet transmission path. In the example illustrated in FIG. 9, the packet transmission path illustrated in FIG. 8 is extracted. As can be seen if the packet path illustrated in FIG. 9 is rotated, the packet path illustrated in FIG. 9 has a tree structure where the CPU which becomes the transmission destination of the packet and to which (D) is added is used as an apex, as illustrated in FIG. 10. FIG. 10 is a diagram illustrating the tree structure of the packet transmission path.

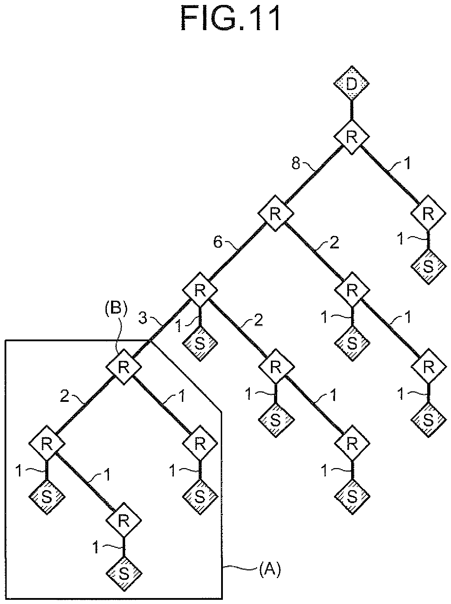

FIG. 11 is a diagram illustrating a value of the joining number that is stored in the packet flowing through each path. As illustrated in FIG. 11, the joining number of numerical values displayed in each path of FIG. 11 is stored in the packet that is transmitted from the CPU to which "S" is added. Specifically, a value that is equal to the number of CPUs of the transmission origin included in a sub tree using each path as a root is stored as the joining number in the packet flowing through each path.

For example, a range that is illustrated by (A) of FIG. 11 will be described. In a router that is illustrated by (B) of FIG. 11, two CPUs that become the transmission origin of the packet exist in the sub tree using the left path of FIG. 11 as the root. In addition, one CPU that becomes the transmission origin of the packet exists in the sub tree using the right path of FIG. 11 as the root. For this reason, in the router that is illustrated by (B) of FIG. 11, the packet where the joining number "2" is stored joins from the left side of FIG. 11 and the packet where the joining number "1" is stored joins from the right path of FIG. 11. For this reason, the router that is illustrated by (B) of FIG. 11 performs the adjustment of each packet, such that the packet joining from the left path of FIG. 11 and the packet joining from the right path of FIG. 11 are transmitted to the upper router of FIG. 11 with a ratio of "2:1".

For this reason, the router that is illustrated by (B) of FIG. 11 can appropriately allocate the band to the communication between the computation node having each CPU included in a range illustrated by (A) of FIG. 11 and the computation node to be the transmission destination. Since each router illustrated in FIG. 11 can execute the same process as that of the router illustrated by (B) of FIG. 11, each router can appropriately allocate the band to the communication between the computation node to be the transmission origin and the computation node to be transmission destination. As such, when the cumulative number of packets competing in the adjustment that the packets participate in is stored as the joining number in each packet and the adjustment is performed on the basis of the joining number stored in each packet, the band can equally be allocated to the communication between the computation nodes.

### Flow of an Adjusting Process

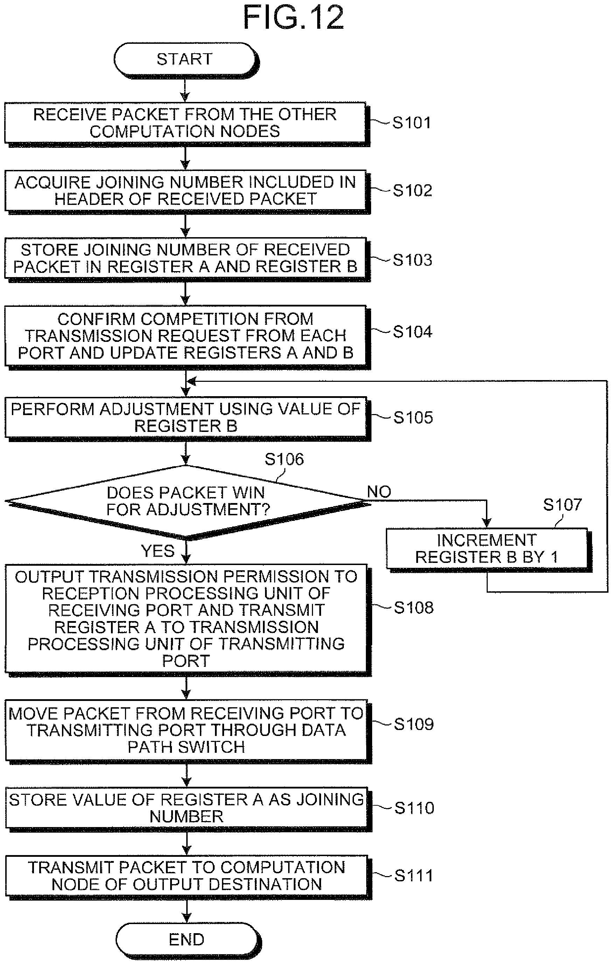

Next, a flow of a process of adjusting the packet by the router 10 will be described using FIG. 12. FIG. 12 is a flowchart illustrating an example of an adjusting process by the router in the first embodiment. First, the router 10 receives the packet from the other computation nodes (step S101). Next, the router 10 acquires the joining number that is stored in the header of the received packet (step S102). The router 10 stores the acquired joining number in the register A and the register B of the joining number updating unit that is included in the adjusting circuit of the port related to the destination of the packet in the adjusting circuit 20 and corresponds to the receiving port (step S103).

Next, the router 10 confirms the competition from the transmission request of each port and updates the values stored in the register A and the register B (step S104). Next, the router 10 executes the adjusting process using the value of the register B (step S105). The router 10 determines whether the packet received in each port wins for the adjustment (step S106). With respect to the packet lost in the adjustment (No in step S106), the router 10 adds 1 to the value stored in the register B of the joining number updating unit associated with the router receiving the packet (step S107). Then, the router 10 executes the adjustment again, using a new resister B (step S105).

With respect to the packet that wins for the adjustment (Yes in step S106), the router 10 transmits the transmission permission to the reception processing unit of the port receiving the packet and transmits the value stored in the register A to the transmission processing unit of the transmitting port (step S108). Next, the router 10 moves the packet from the receiving port to the transmitting port, through the data path switch (step S109). The transmission processing unit of the transmitting port stores the value of the register A as the joining number in the header portion of the packet (step S110). Then, the router 10 transmits the packet to the computation node to be the output destination (step S111) and ends the process.

### Effect of the First Embodiment

As described above, when the router 10 receives the packet, the router 10 acquires the joining number to be the cumulative number of the number of the other packets competing with each packet in the adjusting process that each packet participates in. The router 10 updates the acquired joining number on the basis of the number of received packets, that is, the number of other packets competing in the adjustment. The router 10 selects the packet to be transmitted to the router 10a, on the basis of the updated joining number of each packet. Then, the router 10 stores the updated joining number in the header of the selected packet and transmits the selected packet to the router 10a.

For this reason, the parallel computer system 1 can appropriately distribute the band to the communication between the computation nodes 2 to 2e. That is, when the router 10 performs the adjustment on the basis of the joining number stored in each packet, the parallel computer system 1 can perform the adjustment on the basis of the information indicating the band. Therefore, the parallel computer system 1 can appropriately allocate the band to the communication between the computation nodes 2 to 2e. That is, the parallel computer system 1 performs the adjustment on the basis of the number of times of collision with the other packets up to the time of receipt of one packet at the destination. Therefore, the communication between the computation nodes 2 to 2e can be performed with high efficiency.

In this case, since the cumulative number of the other packets that each packet competes is several tens at most, the number of bits needed to store the joining number becomes smaller than the number of bits needed to store the information indicating the time. For example, a router (SeaStar) that is used in a parallel computer of Cray stores information of 10 bits indicating latency in the packet. However, if it is assumed that the joining number of the packets is about 32, the number of bits needed to store the joining number is 5. For this reason, when the parallel computer system 1 controls the band on the basis of the information indicating the joining number, the size of the header portion in the packet decreases. As a result, the large amount of data can be stored in one packet. Therefore, the parallel computer system 1 can appropriately perform the communication between the computation nodes 2 to 2e.

The joining number of the packet depends on the scale of the parallel computer system 1. That is, when the joining number is 32, the packet hops by 16 in each axial direction until the transmitted packet is received in the two-dimensional meshed network and the total number is added by 1 for each hop. For this reason, the two-dimensional meshed network can correspond to a parallel computer system that has 17 × 17 = 289 computation nodes. Likewise, a two-dimensional toroidal network can correspond to a parallel computer system that has 32 × 32 = 1024 computation nodes. This example applies to the case where the total number is added by 1 for each hop. Apparently, this transmission system can also be applied to a parallel computer system having the low communication frequency, even if the parallel computer system has more computation nodes.

The joining number may not depend on the scale of the parallel computer system 1, the topology for connecting the computation nodes 2 to 2e, the communication pattern between the computation nodes 2 to 2e, and the routing algorithm and can easily be measured. For this reason, when each of the routers 10 to 10e performs the adjustment on the basis of the joining number, the parallel computer system 1 can appropriately allocate the band to the communication between the computation nodes 2 to 2e, without depending on the configuration of the computation nodes 2 to 2e. The parallel computer system 1 can appropriately allocate the band to each communication, without executing a process of further allocating the band to the communication where the band is sufficiently allocated.

The router 10 sets a value obtained by subtracting 1 from the number of received packets (corresponding to the packets) to the joining number acquired from each packet as the new joining number and updates the joining number of the packet transmitted to the router 10a with the new joining number. That is, the router 10 sets a value obtained by adding the number of received packets (other than the packets transmitted to the router) competing with respect to the transmitting port with the packets to the joining number acquired from each packet as the new joining number and updates the joining number of the packet transmitted to the router 10a with the new joining number. For this reason, the router 10 appropriately adds the number of packets competing in the adjustment in the router 10 to the joining number of each packet transmitted to the router 10a. As a result, the parallel computer system 1 can appropriately allocate the band to the communication between the computation nodes 2 to 2e.

Since the router 10 can easily count the number of packets competing in the adjustment performed by the router, the router 10 can store the information indicating the band in each packet, even though a complicated process is not executed. As a result, the router 10 can easily be mounted.

The router 10 compares the joining number acquired from the packets and transmits the packet where the joining number is largest to the router 10a. For this reason, the parallel computer system 1 allocates the wider band to the communication where the allocated band is minimal among the communications between the computation nodes 2 to 2e. Therefore, the parallel computer system 1 can equally allocate the band to the communication between the computation nodes 2 to 2e.

The router 10 executes new adjustment using a value obtained by adding 1 to the updated joining number, with respect to the packet that is not transmitted in the previous adjustment. That is, the router 10 performs new adjustment with the high priority corresponding to the number of times of adjustment loss, with respect to the packet lost in the adjustment. Finally, the router 10 transmits all of the packets to the router 10a. As a result, the parallel computer system 1 can prevent the deadlock.

### [b] Second Embodiment

The parallel computer system 1 according to an aspect of the invention is described above. However, the invention may be embodied in various forms in addition to the parallel computer system 1 described above. Therefore, another embodiment that is included in the invention will be described as the second embodiment.

### (1) With respect to each of the routers 10 to 10e

Each of the routers 10 to 10e makes the packet where the largest value is stored among the joining numbers stored in the packets participating in the adjustment win for the adjustment. However, the embodiments are not limited thereto and an arbitrary process may be executed, as long as the band can appropriately be allocated to the communication between the computation nodes 2 to 2e, on the basis of the joining number stored in each packet.

For example, each of the routers 10 to 10e may calculate the priority weighted to the joining number stored in each packet on the basis of the transmission destination of each packet and perform the adjustment on the basis of the calculated priority. When this process is executed, the parallel computer system 1 can equally allocate the band to the communication between the computation nodes 2 to 2e and appropriately allocate the band set between the computation nodes.

Each of the routers 10 to 10e may have a display device that externally displays the number of packets participating in the adjustment. In this case, a user of the parallel computer system 1 can easily specify a joining place where congestion of the packets starts when the congestion of the packets is generated. That is, once the congestion is generated, even though a use amount of a buffer of each of the routers 10 to 10e or a use amount of credits is monitored, the buffer resources are exhausted in the entire path transmitting and receiving the packets. As a result, it becomes difficult to discover a starting point of the congestion. Meanwhile, the number of packets that the routers 10 to 10e compete increases in only a place where the joining is generated strongly. For this reason, when the parallel computer system 1 externally displays the number of packets competing in the routers 10 to 10e, the parallel computer system 1 makes the user easily specify the generation position of the congestion.

Each of the routers 10 to 10e may externally display the joining number of the received packets for each port. The routers 10 to 10e may count the cumulative number of the number of virtual channels (VC) competing in the adjustment between the VCs and display the cumulative number externally. When the parallel computer system 1 has the routers 10 to 10e, the parallel computer system 1 makes the user easily specify the place where the competition between the VCs is frequently generated.

When a flag to designate that the adjustment is not performed using the joining number is stored in the header of the packet, each of the routers 10 to 10e may use an arbitrary adjusting method including the round-robin system.

### (2) With respect to an initial value of the joining number

When the NICs 4 to 4e according to the first embodiment generate the packets, the NICs 4 to 4e store "1" as the initial value of the joining number. However, the embodiments are not limited thereto. For example, when the NICs 4 to 4e generate important packets for a system management, the NICs 4 to 4e store a value of "2" or more as the initial value of the joining number and can preferentially transmit the packet.

For example, when the NIC 4 generates the packet where "2" is stored as the initial value of the joining number, the parallel computer system 1 can allocate the double band of the normal band to the communication using the packet. Likewise, when the NIC 4 stores an arbitrary number "n" as the initial value of the joining number in the packet, the parallel computer system 1 can allocate the band of "n" times of the normal band to the communication using the packets.

### (3) With respect to the packet

The packet described above has the identification information, the joining number, and the flag in the header portion. However, the embodiments are not limited thereto. A packet using an arbitrary protocol may be used, as long as the joining number is stored in the header portion of the packet.

According to an aspect, a band can appropriately be distributed to communication between computation nodes without deteriorating data transmission efficiency.

## Claims

1. A data transmitting device (10 to 10e) comprising:
a receiving unit (11 to 14) that receives data from a plurality of computation nodes (2 to 2e) transmitting data each other;
an acquiring unit (11 to 14) that acquires a cumulative number of other data being counterparts of adjustment performed by the computation nodes (2 to 2e) until the data is received by the receiving unit (11 to 14) from each received data;
an updating unit (21 24) that updates the cumulative number acquired from each data by the acquiring unit (11 to 14), on the basis of a number of the data received by the receiving unit (11 to 14) ;
an adjusting unit (28) that adjusts the data received by the receiving unit (11 to 14) on the basis of the cumulative number updated by the updating unit (21 24), and selects data to be transmitted to the computation nodes (2 to 2e);
a storing unit (29) that stores the cumulative number updated by the updating unit (21 24) in the data selected by the selecting unit; and
a transmitting unit (15 to 18) that transmits the data in which the cumulative number is stored by the storing unit (29) to the other device.

2. The data transmitting device (10 to 10e) according to claim 1,
wherein the updating unit (21 24) updates the cumulative number by setting a new cumulative number obtained by adding a value obtained by subtracting 1 from the number of data received by the receiving unit (11 to 14) to the cumulative number acquired from the data by the acquiring unit (11 to 14).

3. The data transmitting device (10 to 10e) according to claim 1 or 2,
wherein the adjusting unit (28) compares the cumulative number of each data updated by the updating unit (21 24), and selects data having the largest cumulative number among the data received by the receiving unit (11 to 14) as the data to be transmitted to the other device.

4. The data transmitting device (10 to 10e) according to any one of claims 1 to 3,
wherein the adjusting unit (28) selects the data to be transmitted to the other device, on the basis of a value obtained by adding a number of times of not selecting data to the cumulative number updated by the updating unit (21 24), with respect to a data not selected in the previous adjusting process.

5. The data transmitting device (10 to 10e) according to any one of claims 1 to 4, further comprising:
a plurality of input ports (11 to 14) that receive the data from the computation nodes (2 to 2e); and
a plurality of display units that are provided for the plurality of input ports, respectively, and display the cumulative number of the data.

6. A parallel computer system that has a plurality of computation nodes (2 to 2e) includes an operation processing device and a transmitting device, the transmitting device comprising:
a receiving unit (11 to 14) that receives data from a plurality of computation nodes (2 to 2e) transmitting data each other;
an acquiring unit (11 to 14) that acquires a cumulative number of other data being counterparts of adjustment performed by the computation nodes (2 to 2e) until the data is received by the receiving unit (11 to 14) from each received data;
an updating unit (21 24) that updates the cumulative number acquired from each data by the acquiring unit (11 to 14), on the basis of a number of the data received by the receiving unit (11 to 14) ;
an adjusting unit (28) that adjusts the data received by the receiving unit (11 to 14) on the basis of the cumulative number updated by the updating unit (21 24), and selects data to be transmitted to the computation nodes (2 to 2e);
a storing unit (29) that stores the cumulative number updated by the updating unit (21 24) in the data selected by the selecting unit; and
a transmitting unit (15 to 18) that transmits the data in which the cumulative number is stored by the storing unit (29) to the other device.

7. A controlling method of a data transmitting device (10 to 10e), the controlling method comprising:
receiving data from a plurality of computation nodes (2 to 2e) transmitting data each other;
acquiring a cumulative number of other data being counterparts of adjustment performed by the computation nodes (2 to 2e) until the data is received from each received data;
updating the cumulative number acquired from each data, on the basis of a number of the received data;
selecting data to be transmitted to the computation nodes (2 to 2e) by adjusting the received on the basis of the cumulative number updated by updating;
storing the cumulative number updated by updating in the data selected by selecting; and
transmitting the data in which the cumulative number is stored by storing to the other device.
